# EUROPÄISCHE PATENTSCHRIFT

(11) **EP 2 874 820 B1**
(45) Veröffentlichungstag und Bekanntmachung des Hinweises auf die Patenterteilung: **26.10.2016**
(21) Anmeldenummer: 13739147.0
(22) Anmeldetag: 18.07.2013
(51) Int. Cl.: B41M 3/14, B42D 15/00, G02B 5/18, G07D 7/00, G02B 19/00, B42D 25/29, B42D 25/342, B42D 25/00

(54) **SICHERHEITSELEMENT FÜR SICHERHEITSPAPIERE, WERTDOKUMENTE ODER DERGLEICHEN**
SECURITY ELEMENT FOR SECURITIES, DOCUMENTS OF VALUE OR SUCHLIKE
ÉLÉMENT DE SÉCURITÉ POUR PAPIERS DE SÉCURITÉ, DOCUMENTS FIDUCIAIRES OU SIMILAIRES

(30) Priorität: 20.07.2012 DE 102012014414
(43) Veröffentlichungstag der Anmeldung: 27.05.2015
(73) Patentinhaber: Giesecke & Devrient GmbH, 81677 München (DE)
(72) Erfinder: LOCHBIHLER, Hans, 80337 München (DE)
(86) Internationale Anmeldenummer: PCT/EP2013/002132
(87) Internationale Veröffentlichungsnummer: WO 2014/012667

(56) Entgegenhaltungen:
- WO-A1-2011/107793
- WO-A1-2012/069163
- US-A1- 2012 105 928

## Beschreibung

Die Erfindung betrifft ein-Sicherheitselement für einen zu schützenden Gegenstand, wie z. B. ein Sicherheitspapier, Wertdokument oder dergleichen, das mehrere, in einem Muster angeordnete Mikroreflektoren und mehrere Mikrostrukturen aufweist, die zusammen mit den Mikroreflektoren ein von einem Betrachter wahrnehmbares Bild erzeugen.

Die Erfindung bezieht sich weiter auf ein Sicherheitspapier oder Wertdokument.

Die Erfindung bezieht sich schließlich auch auf ein Verfahren zum Herstellen eines Sicherheitselementes für einen zu schützenden Gegenstand, wie z. B. ein Sicherheitspapier, Wertdokument oder dergleichen, wobei auf einem Substrat mehrere, in einem Muster angeordnete Mikroreflektoren und mehrere Mikrostrukturen aufgebildet werden, die zusammen mit den Mikroreflektoren ein von einem Betrachter wahrnehmbares Bild erzeugen.

Zu schützende Gegenstände werden häufig mit einem Sicherheitselement ausgestattet, das eine Überprüfung der Echtheit des Gegenstandes erlaubt und somit als Schutz vor unerlaubter Reproduktion dient. Solche Gegenstände sind beispielsweise Sicherheitspapiere, Ausweis- oder Wertdokumente (wie z. B. Banknoten, Chipkarten, Pässe, Identifikationskarten, Ausweiskarten, Aktien, Anleihen, Urkunden, Gutscheine, Schecks, Eintrittskarten, Kreditkarten, Gesundheitskarten) sowie Produktsicherungselemente, wie z. B. Etiketten, Siegel und Verpackungen. Es kann sich auch um Produkte selbst handeln, wie beispielsweise eine Kapsel eines Medikamentes, für das Fälschungen zu befürchten sind.

Für Sicherheitselemente sind im Stand der Technik ausführlich sogenannte Moire-Vergrößerungsanordnungen beschrieben, beispielsweise in der WO 2005/106601 A2, EP 1979768 A1, EP 1182054 B1, WO 2011/029602 A2, WO 2002/101669 A2 und EP 1893074 A2. Diese Vergrößerungsanordnungen kombinieren Fokussierelemente mit Mikrobildern, welche sich in der Bildebene der Fokussierelemente befinden. Die Mikrobilder sind zu den Fokussierelementen so ausgerichtet, dass sich durch den sogenannten Moire-Effekt ein synthetisches Bild ergibt, wenn man das Sicherheitselement betrachtet. Dieses synthetische Bild hat Eigenschaften (beispielsweise einen orthoparallaktischen Effekt), die durch einfache Kopie der Bilder nicht reproduzierbar sind.

Die Fokussierelemente können als Mikrolinsen oder Mikroreflektoren ausgebildet sein. Letztere Bauweise entspricht der eingangs genannten, gattungsgemäßen Art und ist Gegenstand der WO 2010/136339 A2 und der WO 2011/012460 A2.

Bekannten Moiré-Vergrößerungsanordnungen ist es gemein, dass die Mikrobilder eine stark verkleinerte Form zumindest eines Teilausschnittes des synthetischen Bildes sind. Sie sind durch dem Bildinhalt entsprechende Reliefoberflächen gebildet, welche mit Farbe gefüllt sind, oder welche anderweitig lichtabsorbierende Eigenschaften haben. Für die Lichtabsorption ist es aus den genannten Druckschriften auch bekannt, regelmäßige oder unregelmäßige Sub-Wellenlängenstrukturen zu verwenden, welche als Lichtfallen fungieren und deshalb auch als Mottenaugenstrukturen bezeichnet werden.

Die bekannten Sicherheitselemente benötigen einen Abstand zwischen Mikrobildern und Fokussierelementen, der in etwa der Fokuslänge der Fokussierelemente entspricht. Der Stand der Technik erfüllt diese Anforderung in der Regel dadurch, dass Mikrobilder und Mikrofokussierelemente auf gegenüberliegenden Seiten einer Folie angeordnet sind, deren Dicke in etwa der Fokuslänge der Fokussierelemente entspricht. Dieses Vorgehen erfordert eine beidseitige Prägung der Folie in sehr exaktem Register zueinander. Dies ist aufwendig und deshalb nachteilig.

Das Dokument WO 2011/107793 A1 offenbart die Merkmale des Oberbegriffs der Ansprüche 1 und 11.

Der Erfindung liegt die Aufgabe zugrunde, bei einem Sicherheitselement, einem Sicherheitspapier oder Wertdokument und bei einem Herstellverfahren der eingangs genannten Art diesen Nachteil zu beheben, also ohne die strengen Registeranforderungen, die im Stand der Technik erforderlich sind, auszukommen.

Diese Aufgabe wird erfindungsgemäß gelöst durch ein Sicherheitselement für einen zu schützenden Gegenstand, wie z. B. ein Sicherheitspapier, Wertdokument oder dergleichen, das mehrere, in einem Muster angeordnete Mikroreflektoren und mehrere Mikrostrukturen aufweist, die zusammen mit den Mikroreflektoren ein von einem Betrachter wahrnehmbares Bild erzeugen, wobei jede Mikrostruktur als reflektives Gitter ausgebildet und einem der Mikroreflektoren zugeordnet ist, wodurch Gitterreflektoren bestehend aus jeweils einem Mikroreflektor und mindestens einem Gitter gebildet sind, jedes Gitter so ausgebildet ist, dass es sichtbare Strahlung, die aus einem Halbraum einfällt, in eine erste Beugungsordnung und zum zugeordneten Mikroreflektor hin beugt, in jedem Gitterreflektor das Gitter und der Mikroreflektor so aufeinander abgestimmt sind, dass der Mikroreflektor vom Gitter in die erste Beugungsordnung gebeugte Strahlung in den Halbraum zurück reflektiert, und innerhalb des Musters mindestens eine der folgenden Eigenschaften der Gitterreflektoren variiert, um das Bild zu erzeugen: Beugungseigenschaft der Gitter, Lage der Gitter zum jeweils zugeordneten Mikroreflektor, Reflexionseigenschaft der Mikroreflektoren.

Die Aufgabe wird weiter gelöst mit einem Sicherheitspapier oder Wertdokument, das ein solches Sicherheitselement aufweist.

Die Aufgabe wird schließlich ebenfalls gelöst mit einem Verfahren zum Herstellen eines Sicherheitselementes für einen zu schützenden Gegenstand, wie z. B. Sicherheitspapiere, Wertdokumente oder dergleichen, wobei auf einem Substrat mehrere, in einem Muster angeordnete Mikroreflektoren und mehrere Mikrostrukturen ausgebildet werden, die zusammen mit den Mikroreflektoren ein von einem Betrachter wahrnehmbares Bild erzeugen, wobei jede Mikrostruktur als reflektives Gitter ausgebildet und einem der Mikroreflektoren zugeordnet wird, wodurch Gitterreflektoren bestehend aus jeweils einem Mikroreflektor und mindestens einem Gitter gebildet werden, wobei jedes Gitter so ausgebildet wird, dass es sichtbare Strahlung, die aus einem Halbraum einfällt, in eine erste Beugungsordnung und zum zugeordneten Mikroreflektor hin beugt, in jedem Gitterreflektor das Gitter und der Mikroreflektor so aufeinander abgestimmt werden, dass der Mikroreflektor vom Gitter in die erste Beugungsordnung gebeugte Strahlung in den Halbraum zurück reflektiert, und innerhalb des Musters mindestens eine der folgenden Eigenschaften der Gitterreflektoren variiert wird, um das Bild zu erzeugen: Beugungseigenschaft der Gitter, Lage der Gitter zum jeweils zugeordneten Mikroreflektor, Reflexionseigenschaft der Mikroreflektoren.

Erfindungsgemäß werden die Mikrostrukturen also nicht mehr als Mikrobildelemente mit separatem Mikroreflektor ausgebildet. Statt dessen sind Mikrostrukturen und Mikroreflektoren in Gitterreflektoren zusammengefasst, die mindestens ein reflektives Gitter und einen zugeordneten Mikroreflektor haben, wobei die Gitterausbildung und die Geometrie des Mikroreflektors so gewählt ist, dass die erste Beugungsordnung am Gitter reflektiert und vom Mikroreflektor in den Halbraum zurückgeworfen, bevorzugt gebündelt wird. Die Rückstrahlung hängt hinsichtlich Richtung, in die sie abgegeben wird, Abstrahlwinkel und Farbe von der Ausbildung des Gitterreflektors ab. Durch die Anordnung verschieden ausgestalteter Gitterreflektoren im Muster können farbige Symbole bzw. Bilder erzeugt werden.

Ein Betrachter nimmt aus einer Betrachtungsrichtung einen einzelnen Gitterreflektor unterschiedlich in Intensität und/oder Farbe, aber ohne Bildinformation wahr. Die Bildinformation rührt anders als im Stand der Technik nicht von der Mikrostrukturierung selbst her, da jedes der reflektiven Gitter für sich keine Bildinformation bereitstellt. Die Bildinformation wird vielmehr durch das Zusammenwirken mehrerer Gitterreflektoren mit verschiedener Ausbildung (Kombination aus Mikroreflektor und Mikrostruktur im jeweiligen Gitterreflektor) erreicht, so dass zwischen den Gitterreflektoren ein Farb- oder Intensitätsunterschied bewirkt wird, der insgesamt das wahrnehmbare Bild erzeugt.

Da die reflektierenden Gitter in Kombination mit den Mikroreflektoren in der Regel stark winkelabhängige Eigenschaften besitzen, können auch Parallaxenbilder wie bei einer Moiré-Vergrößerungsanordnung erzeugt werden.

Durch eine geeignete Ausbildung ist es auch möglich, einen stereoskopischen Effekt zu erzeugen, indem die Richtung, in die Mikroreflektoren vom Gitter in die erste Beugungsordnung gebeugte Strahlung zurückreflektieren und bevorzugt bündeln, so eingestellt wird, dass einige Gitterreflektoren Bildinformationen für das linke Auge, andere für das rechte Auge (entsprechend dem Sehwinkelunterschied) bereitstellen.

Die Bildinformation wird vom Sicherheitselement in der Regel dadurch erzeugt, dass jeder Gitterreflektor bestehend aus Mikroreflektor und Gitter(n) die Funktion eines Pixels zur Bilderzeugung hat.

Das Sicherheitselement kann in einem einzigen Abformverfahren hergestellt werden. Man benötigt keine registerhaltig zueinander auszuführenden Abformschritte auf verschiedenen Seiten einer Folie. Es ist vielmehr möglich, mit einem einzigen Prägeprozess ein Substrat, z. B. eine Folie, so zu gestalten, dass sowohl die Strukturen der Mikroreflektoren als auch der Gitter erzeugt werden. Die Relativlage (und Form) von Gitter und zugeordnetem Mikroreflektor wird durch das entsprechende Prägewerkzeug vorgegeben, so dass keine zueinander im Register stehenden Folgen von Bearbeitungsschritten am Substrat mehr nötig sind. Die Herstellung ist damit gegenüber den genannten gattungsgemäßen Sicherheitselementen drastisch vereinfacht.

Weiter ist die Mindestdicke des Sicherheitselementes nicht mehr durch eine Fokallänge von Fokussierungselementen vorgegeben. Das Sicherheitselement kann erheblich dünner ausgebildet werden, als es im Stand der Technik möglich war. Die Dicke ist ausschließlich durch die Tiefe der Mikroreflektoren beschränkt. Diese Tiefe entspricht in etwa der Höhe, welche Mikrolinsen bekannter Moire-Vergrößerungsanordnungen haben, was zum Ergebnis führt, dass die Mindestdicke des Sicherheitselementes nur ein Bruchteil der von herkömmlichen Sicherheitselementen mit Moiré-Vergrößerungsanordnungen beträgt. Dennoch kann ein Moire-Effekt gleichermaßen realisiert werden.

Die Gitter, welche den Mikroreflektoren zugeordnet sind und beispielsweise am Boden eines Hohlspiegels oder einer Spiegelrinne liegen, sind reflektierende Gitter. Sie reflektieren die erste Beugungsordnung zum zugeordneten Mikroreflektor hin. Dies ist ein grundlegender Unterschied zu den im Stand der Technik bekannten absorbierenden Strukturen, die als Mottenaugenstrukturen oder auch als regelmäßige Sub-Wellenlängenstrukturen möglichst geringe Reflexe erzeugen sollen, um einen guten Kontrast bei einem Mikrobild zu bewirken.

Bevorzugt sind die Gitter dabei so ausgebildet, dass höhere Beugungsordnungen als die ± 1. Beugungsordnung möglichst nicht zum Mikroreflektor oder unter derart flachen Winkeln reflektiert werden, dass der Mikroreflektor Strahlungsintensität der höheren Beugungsordnungen nur zu einem geringeren Anteil in den Halbraum leitet als Strahlung, die in die ± 1. Beugungsordnung gebeugt wurde. Weiter ist es zu bevorzugen, dass die Intensität der in die ± 1. Beugungsordnung gebeugten Strahlung oberhalb der Intensität der in die 0. Beugungsordnung gebeugten Strahlung liegt.

Für bestimmte Anordnungen kann es von Vorteil sein, wenn von den zwei ± 1. Beugungsordnungen eine bevorzugt ist. Dies kann durch ein sogenanntes geblaztes ("blazed") Gitter erreicht werden, das eine Asymmetrie zwischen -1. und +1. Ordnung bereitstellt.

Die Mikroreflektoren können als rinnenförmige Reflektoren ausgestaltet werden. Sie sind dann konkave Rinnen, die vorzugsweise einen ebenen Boden haben. Der ebene Boden muss nicht zwingend reflektierend sein. Am ebenen Boden ist das Gitter angeordnet, das dann ebenfalls als Lineargitter ausgebildet ist. Insbesondere bei rinnenförmigen Reflektoren ist es auch möglich, mehr als ein Gitter entlang der konkaven Rinnen des Reflektors anzuordnen. Optional dazu können die Mikroreflektoren als konkave Hohlspiegel gestaltet sein, die vorzugsweise einen ebenen Boden haben, an dem das Gitter liegt. Auch hier muss der Boden nicht reflektierend sein. Natürlich können die Mikroreflektoren auch durch nicht-konkave Hohlspiegel oder Rinnen realisiert werden. Der ebene Boden der Mikroreflektoren kann insbesondere schräg ausgestaltet sein, so dass sich das Gitter zum Mikroreflektor hin neigt.

Alternativ können auch Mikroreflektoren eingesetzt werden, deren Boden nicht eben, sondern beispielsweise gewölbt ausgestaltet ist.

Die einzelnen Gitterreflektoren als Pixel einzusetzen, ist dann besonders einfach, wenn die Mikroreflektoren als konkave Hohlspiegel ausgebildet sind, die rotationssymmetrisch sind, beispielsweise die Form der Mantelfläche einer Kugelschicht oder Ellipsoidschicht haben. Eine solche Mantelfläche erhält man, wenn man aus einem Ellipsoid oder einer Kugel durch zwei parallele, die Kugel bzw. das Ellipsoid echt schneidenden Ebenen eine Schicht herausschneidet. Die kleinere der beiden durch den Schnitt entstehenden parallelen Kreisflächen oder Ellipsen stellt dann den Boden des konkaven Hohlspiegels dar. Er muss nicht verspiegelt sein.

Für übliche optische Ausführungen ist es bevorzugt, dass die Mikroreflektoren eine Tiefe von 2 bis 30 µm haben, bevorzugt von 5 bis 20 µm. Weiter ist es bevorzugt, dass jedes Gitter eine Gitterperiode zwischen 0,3 µm und 1 µm hat. Solche Strukturabmessungen ergeben gute Resultate bei zugleich einfacher Herstellbarkeit.

Gestaltet man das Sicherheitselement so, dass jeder Gitterreflektor als Pixel wirkt, ist es, wie bereits erwähnt, bevorzugt, den Mikroreflektor als rotationssymmetrischen Hohlspiegel auszubilden. Das Gitter kann dann ein Zirkulargitter sein. Die wahrnehmbaren Eigenschaften jedes Pixels stellt man dann z. B. durch die Lage des Zirkulargitters am Boden des Hohlspiegels ein. Je nach lateraler Lage des Gitters im jeweiligen Mikroreflektor hat das einzelne Pixel, dem der Gitterreflektor dann entspricht, eine unterschiedliche Intensität im Bild.

Gitterreflektoren mit runden Aperturen werden bevorzugt in einem hexagonalen Muster angeordnet, da man dann eine möglichst hohe Flächenfüllung erzielen kann.

Die einzelnen Gitterreflektoren können mit sie umgebenden Stegen ausgebildet werden, d. h. zumindest einige benachbarte Gitterreflektoren stoßen dann nicht direkt aneinander, sondern sind durch einen Steg getrennt. Zwischen den Gitterreflektoren liegen folglich Stegflächen. Durch Strukturierung der Beschichtung der Stegflächen und/ oder Gestaltung der Dicke des Substrates im Bereich der Stegflächen kann man dafür sorgen, dass die Stegflächen einfallendes Licht unterschiedlich reflektieren und/oder transmittieren. Der Effekt wird bevorzugt lateral variabel ausgestaltet, um zusätzlich Symbole zu kodieren und in Transmission sichtbar zu machen. Damit ist eine zusätzliche Fälschungssicherheit erreicht.

Eine lateral variierende Beschichtung der Stegflächen wird bevorzugterweise dadurch realisiert, dass die Stegflächen zuerst mit einer Beschichtung, beispielsweise mit einer Metallisierung versehen werden, und diese bereichsweise wieder entfernt wird, z. B. durch ein Ätzverfahren. Alternativ ist es möglich, die auf den Stegflächen vorliegende Beschichtung durch Kaschieren mit einer Akzeptorfolie bereichsweise zu transferieren und damit bereichsweise von den Stegflächen zu entfernen. Weitere Einzelheiten zu einem derartigen Transferverfahren können der Druckschrift WO 2011/138039 A1 entnommen werden, deren Offenbarung insoweit in die vorliegende Anmeldung aufgenommen wird.

Eine besonders gute Effizienz der ± 1. Beugungsordnung erreicht man, wenn Mikroreflektoren und Gitter an ihrer dem Halbraum zugewandten Seite metallisch beschichtet sind, bevorzugt mit Aluminium, Silber, Gold, Kupfer, Chrom oder einer Legierung, die eines oder mehrerer dieser Metalle enthält. Die Mikroreflektoren und Gitter können auch durch hochbrechende Dielektrika, wie z. B. TiO₂ oder ZnS, oder Halbmetalle wie Silizium und Germanium verwirklicht sein. Insbesondere können die Gitter als solche durch diese Materialien ausgebildet sein. Ferner können diese Materialien als reflektierende Beschichtung der Mikroreflektoren dienen.

Die Mikroreflektoren können in ihrer Apertur (Öffnung) grundsätzlich jede beliebige Form haben, beispielsweise quadratische, kreisförmige oder rechteckige Aperturen.

Das Sicherheitselement kann insbesondere als Sicherheitsfaden, Aufreißfaden, Sicherheitsband, Sicherheitsstreifen, Patch oder als Etikett ausgebildet sein. Insbesondere kann das Sicherheitselement transparente Bereiche oder Ausnehmungen eines zu schützenden Gegenstandes überdecken.

Das Sicherheitselement kann insbesondere Teil einer noch nicht umlauffähigen Vorstufe zu einem Wertdokument sein, das beispielsweise auch zusätzliche Echtheitsmerkmale (wie z. B. im Volumen vorgesehene Lumineszenzstoffe etc.) aufweisen kann. Unter Wertdokumenten werden hier einerseits das Sicherheitselement aufweisende Dokumente verstanden, andererseits können Wertdokumente auch sonstige Dokumente oder Gegenstände sein, die mit dem erfindungsgemäßen Sicherheitselement versehen werden können, damit sie nicht kopierbare Echtheitsmerkmale aufweisen. Chip- oder Sicherheitskarten, wie z. B. Bank- oder Kreditkarten, sind weitere Beispiele für ein Wertdokument.

Für das erfindungsgemäße Herstellungsverfahren kommen insbesondere Direktbelichtungstechniken, z. B. mit Hilfe eines Laserwriters in Frage. Die Herstellung kann analog zu den bekannten Herstellungsverfahren für Mikrolinsen erfolgen. Das Original der Struktur wird über Direktbelichtung mit Hilfe eines Laserwriter in ein mit Photolack beschichtetes Substrat geschrieben und anschließend der belichtete Anteil des Photolacks entfernt. Ein belichtetes Original kann anschließend galvanisch abgeformt und somit ein Prägestempel erzeugt werden. Letztendlich wird die Struktur über einen Prägeprozess beispielsweise in UV-Lack auf Folie repliziert. Alternativ kann ein Nanoimprint-Verfahren eingesetzt werden. Aufwendigere Verfahren zur Originalherstellung wie Elektronenstrahl- oder "Focussed Ion Beam"-Belichtungsverfahren erlauben eine noch feinere Ausgestaltung der Geometrie.

Das erfindungsgemäße Herstellungsverfahren kann so ausgebildet werden, dass die beschriebenen bevorzugten Ausbildungen und Ausführungsformen des Sicherheitselementes hergestellt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:
- Fig.1: eine schematische Darstellung eines Sicherheitselements,
- Fig. 2a und b: Illustrationen der Reflexionen, die beim Sicherheitselement der Fig. 1 auftreten können,
- Fig. 3a und 3b: schematische Darstellungen ähnlich der Fig. 1 zur Veranschaulichung unterschiedlicher Gitterstrukturen, die bei dem Sicherheitselement der Fig. 1 eingesetzt werden können,
- Fig. 4, 5 und 6: Beugungseffizienzen für unterschiedliche Gitterstrukturen, die im Sicherheitselement der Fig.1 zum Einsatz kommen können,
- Fig. 7a-i: schematische Illustrationen von Reflexionen, die bei einer ersten Ausführungsform des Sicherheitselementes auftreten,
- Fig. 8, 9 und 10: Darstellungen ähnlich der Fig. 7 für weitere Ausführungsformen des Sicherheitselementes,
- Fig. 11: eine Draufsicht auf ein Sicherheitselement ähnlich dem der Fig.1 mit Abwandlungen hinsichtlich Formen von Reflektoren und Gitterstrukturen,
- Fig. 12: eine Draufsicht ähnlich der Fig. 11, jedoch mit Reflektoren und Gitterstrukturen, die eine kreisförmige Apertur haben,
- Fig. 13: eine Draufsicht auf ein Sicherheitselement mit einer Anordnung von Lineargittern und rinnenförmigen Reflektoren, die jeweils ähnlich der Bauweise der Fig. 11 ausgestaltet sind und stereoskopisch ein Bild erzeugen,
- Fig. 14: eine Anordnung von Lineargittern mit rinnenförmigen Reflektoren zur Darstellung eines Motivs ebenfalls zur stereoskopischen Bilderzeugung,
- Fig. 15: eine Darstellung ähnlich der Fig.1 für eine Weiterbildung des dort gezeigten Sicherheitselementes und
- Fig. 16: eine Draufsicht auf das Sicherheitselement der Fig. 15.

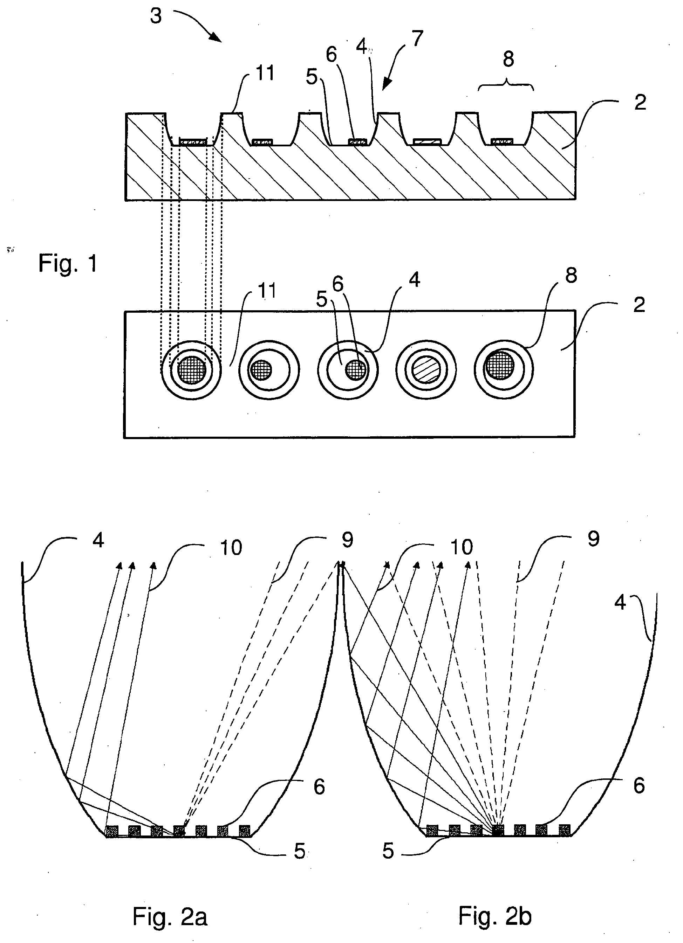

Fig.1 zeigt im oberen Teil schematisch eine Schnittdarstellung und im unterem Teil die zugehörige Draufsicht auf ein Sicherheitselement 1. Das Sicherheitselement 1 ist aus einer Folie 2 gefertigt, an deren Oberseite (der Begriff ist rein exemplarisch zu verstehen und soll keine Vorzugsrichtung angeben) eine Prägestruktur 3 ausgebildet ist. Die Prägestruktur 3 umfasst eine Vielzahl von Reflektoren 4, die im Ausführungsbeispiel als elliptische Reflektoren mit einem ebenen Boden 5 ausgeführt sind. Am Boden 5 jedes Reflektors 4 befindet sich ein reflektives Gitter 6. Die gesamte Prägestruktur 3 ist mit einer Metallschicht überzogen. Die Metallschicht überdeckt somit sowohl die konkave Fläche, welche die Reflexionseigenschaften des Reflektors 4 festlegt, als auch das Gitter 6.

Jeweils ein Gitter 6 bildet mit dem zugeordneten Reflektor 4 einen Gitterreflektor 7. Jeder Gitterreflektor 7 wirft von der Oberseite auf die Apertur 8 des Gitterreflektors 7 einfallende Strahlung gebündelt in den Halbraum zurück, aus dem die Strahlung kam. Die Richtung und Intensität hängt von der Ausgestaltung des Gitterreflektors 7 ab.

Fig. 1 verdeutlicht, dass im Sicherheitselement eine Vielzahl an Reflektoren und Gitter vorhanden sind, wobei im Ausführungsbeispiel jeweils ein Gitter 6 einem Reflektor 4 zugeordnet ist. Dies ist dadurch erreicht, dass das Gitter 6 am Boden 5 des entsprechenden Reflektors 4 angeordnet ist. Die Gitterreflektoren 7 sind in einem Muster angeordnet, das vereinfacht in der Draufsicht, die im unteren Teil der Fig.1 zu sehen ist, als Nebeneinanderreihung der Gitterreflektoren 7 ausgebildet ist. Innerhalb des Musters variiert die Ausführung der Gitterreflektoren 7, so dass jeder Gitterreflektor 7 ein Pixel eines das Sicherheitselement 1 kennzeichnenden Motivs bildet. Für die Variation der Gitterreflektoren 7 gibt es verschiedene Möglichkeiten, die nachfolgend erläutert werden. In der Ausführungsform der Fig.1 variiert exemplarisch die Lage des Gitters 6 am Boden 5.

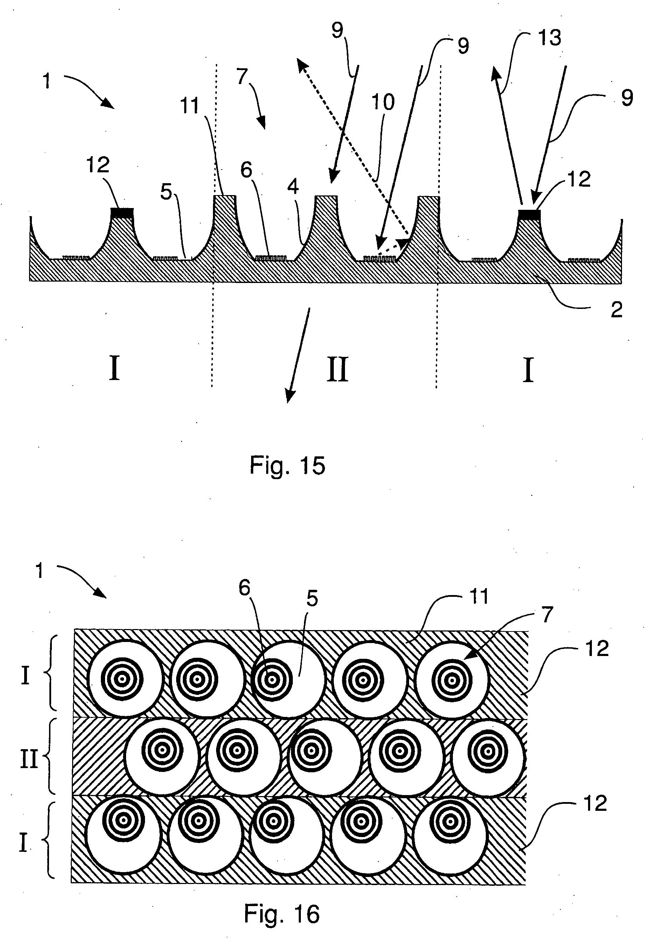

Zwischen den Gitterreflektoren 7 ist in der Darstellung der Fig. 1 ein Abstand, der dazu führt, dass am Substrat Stegflächen 11 gebildet sind, die zwischen den Rändern benachbarter Gitterreflektoren 7 liegen. Diese Stegflächen können, wie nachfolgend noch anhand der Bauweise der Figuren 15 und 16 erläutert wird, zum Kodieren eines weiteren optischen Effektes eingesetzt werden. In der Ausführungsform der Fig.1 sind die Stegflächen jedoch ohne weitere Bedeutung.

Für die Reflexion von Beleuchtungsstrahlung, die bezogen auf die Schnittdarstellung im oberen Teil der Fig.1 von oben einfällt, kommt es, wie noch erläutert werden wird, wesentlich auf die Reflexion der Strahlung an, die das Gitter 6 zurückstreut. Diese Reflexion erfolgt am jeweiligen Reflektor 4. Der Begriff "Reflektor" ist samt nicht auf eine direkte Reflexion der einfallenden Beleuchtungsstrahlung bezogen, wie es z. B. bei einem Retroreflektor der Fall wäre, sondern auf die reflektierende Eigenschaft, welche der Reflektor 4 für vom Gitter 6 zurückgebeugte Strahlung hat.

Diese Wirkung ist in Fig. 2 gut zu erkennen, die in ihren Teilfiguren 2a und 2b zeigt, wie einfallende Strahlung 9 vom Gitter 6 zum Reflektor 4 hin gebeugt und dort reflektiert, bevorzugt gebündelt, wird, so dass sie als Rückstrahlung 10 wieder in den Halbraum zurückgeworfen wird, aus dem die einfallende Strahlung 9 kam. Fig. 2a zeigt die Verhältnisse für die 2. Beugungsordnungen, und Fig. 2b stellt die entsprechende 1. Beugungsordnung dar. Die - 2. und -1. Ordnung wären lediglich zur Symmetrieachse des Reflektors und des Gitters verschoben, wenn, wie es in der vereinfachten Darstellung der Fig. 2 der Fall ist, das Gitter 6 symmetrisch am Boden 5 angeordnet ist. Der einfacheren Erläuterung halber geht Fig. 2 von einem rotationssymmetrischen Reflektor 4 aus, und die Geometrie des Reflektors 4 ist so gewählt, dass die 1. Beugungsordnung des sichtbaren Spektrums reflektiert und gebündelt wird.

Im Beispiel besitzt der Reflektor 4 eine elliptische Geometrie mit einer Apertur von 11,4 µm, einem Scheitel von 12,8 µm und einem zentrisch in einer Tiefe von 11,4 µm angeordneten Gitter. Die Gitterperiode beträgt 800 nm.

Für eine Wellenlänge von 520 nm liegen die bereits erwähnten ± 2. und ± 1. Beugungsordnungen vor, für die in den Fig. 2a und 2b die Randstrahlen der einfallenden Strahlung 9, für die noch Rückstrahlung 10 entsteht, und der Rückstrahlung 10 eingezeichnet sind. Aufgrund der Rotationssymmetrie ist es möglich, für die einfallende Strahlung 9 und die Rückstrahlung 10 die Raumwinkelangabe durch einen ebenen Winkel zu ersetzen. Im Falle der ± 2. Beugungsordnung beträgt der Öffnungswinkel der einfallenden Strahlung (auch Akzeptanzwinkel genannt) 9°. Dieses Licht wird als Rückstrahlung 10 in einen Austrittswinkelbereich von 3,7° umgesetzt. Für die ± 1. Ordnung beträgt der Öffnungsbereich der einfallenden Strahlung 31,5°, und der Austrittswinkelbereich 17,3°.

Für das Sicherheitselement 1 der Fig.1 möchte man die Effizienz der 1. Beugungsordnung maximieren und hingegen übrige Beugungsordnungen möglichst unterdrücken, d. h. nicht in Rückstrahlung 10 umsetzen. Dies kann z. B. durch eine geeignete Wahl des Gitters 6 erreicht werden. Wählt man beispielsweise für das erwähnte Gitter mit Periode 800 nm als Material Aluminium mit einem Steg/Lücken-Verhältnis von 1 : 1 sowie einer Steghöhe von 150 nm, ist die Effizienz, d. h. Rückstreuintensität, der ± 1. Beugungsordnung deutlich größer als die anderer Beugungsordnungen.

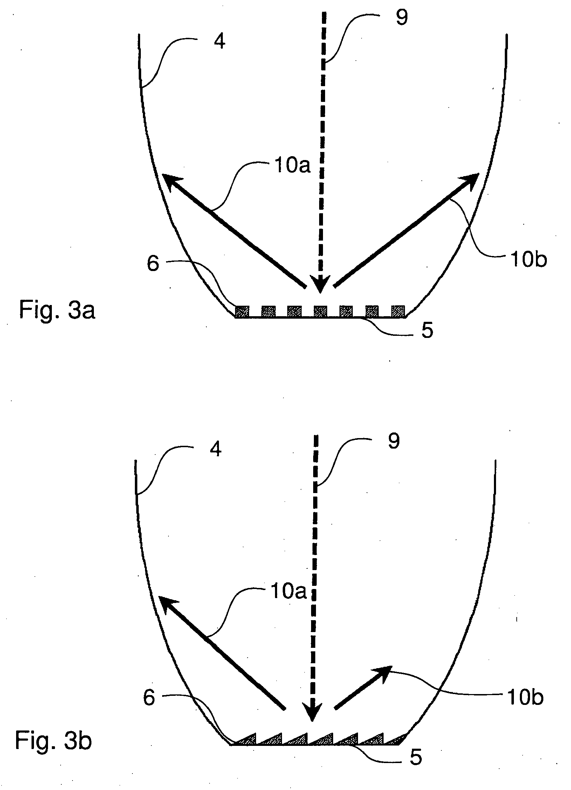

Bei einem Gitter mit rechteckigem Stegprofil sind negative und positive Beugungsordnungen gleich, da das Gitter symmetrisch ist (immer auf den Fall bezogen, dass das Gitter auch symmetrisch am Boden 5 angeordnet ist). Die Bevorzugung einer Richtung kann man durch ein asymmetrisches Gitterprofil erreichen, wie es als geblaztes Gitter im Stand der Technik bekannt ist. Die entsprechenden Verhältnisse sind exemplarisch in Fig. 3a und 3b dargestellt. Hier zeigt Fig. 3a ein Rechteckgitter, bei dem -1. und + 1. Ordnung symmetrisch, d. h. beide gleich stark ausgebildet sind. Verwendet man ein geblaztes Gitter, ist eine Ordnung bevorzugt, die andere unterdrückt. Dies wird z. B. durch die asymmetrische Dreiecksform der Gitterstege erreicht. Andere Möglichkeiten eine asymmetrische Bevorzugung negativer oder positiver Beugungsordnungen zu erzeugen, sind sogenannte Dammann-Gitter oder "slanted gratings".

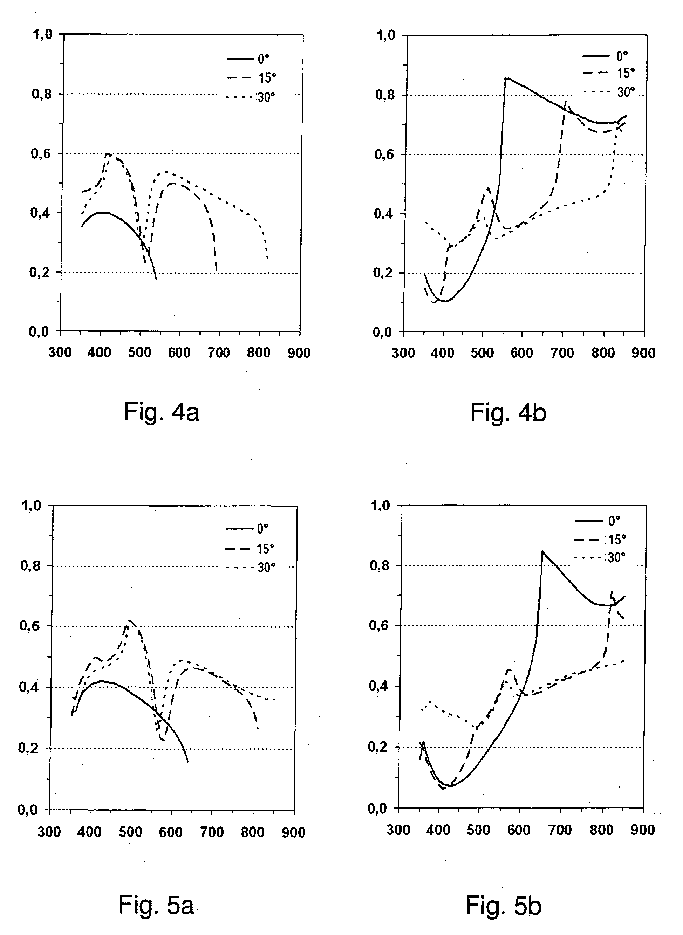

Grundsätzlich kann beim reflektiven Gitter 6 die Intensität der ± 1. Ordnung im sichtbaren Spektralbereich oberhalb der Intensität der 0. Beugungsordnung, d. h. der spiegelnden Rückreflexion liegen. Fig. 4a und 4b zeigen die Beugungseffizienzen der -1. und der 0. Beugungsordnung eines Gitters mit 550 nm Periode im sichtbaren Spektralbereich für unterschiedliche Einfallswinkel; Fig. 4a die Effizienz der 1. Beugungsordnung, Fig. 4b die der 0. Beugungsordnung. Es handelt sich hier um ein Reflexionsgitter mit Rechteckprofil aus Aluminiumstegen, die eine Breite von 275 nm und eine Höhe von 120 nm haben und in einer Gitterperiode von 550 nm angeordnet sind.

Die Fig. 5a und 5b zeigen eine analoge Darstellung für ein Gitter mit einer Gitterperiode von 650 nm und Aluminiumstegen mit 325 nm Breite und 120 nm Höhe. Bereits diese hier erreichten Effizienzen genügen für den Einsatz als reflektives Gitter in einem Sicherheitselement 1 gemäß Fig. 1.

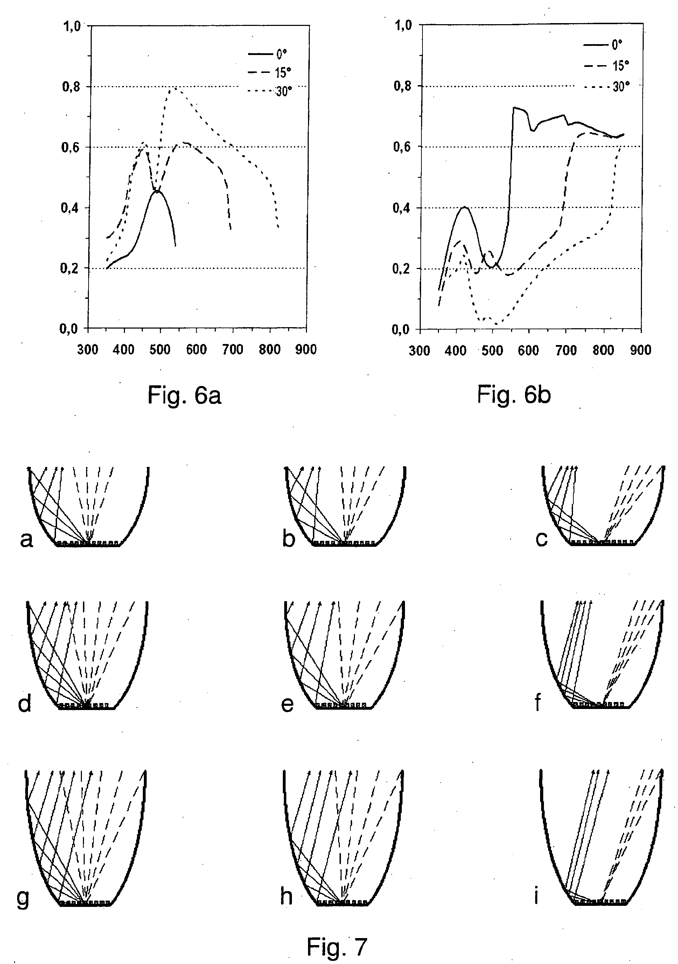

Nochmals verbesserte Beugungseffizienzen zeigt ein geblaztes Gitter gemäß Fig. 3b, wie die Auftragungen in den Fig. 6a und 6b belegen, die denen der Fig. 4a und 4b entsprechen. Die Gitterperiode beträgt wiederum 550 nm und die maximale Höhe des Dreiecksprofils der Aluminiumstege 340 nm. Der Vergleich mit Fig. 4 zeigt, dass die Effizienz der -1. Ordnung nochmals angehoben ist.

Die Fig. 7a-c, d-f und g-i zeigen die Reflexion der 1. Beugungsordnung für verschiedene Wellenlängen der einfallenden Strahlung. Dabei sind in den Fig. 7a, 7d und 7g die Verhältnisse bei blauem Licht (Wellenlänge 450 nm), in den Fig. 7b, 7e und 7h bei grünem Licht (Wellenlänge 520 nm) und in den Fig. 7c, 7f und 7i die Verhältnisse bei rotem Licht (Wellenlänge 700 nm) eingezeichnet. Die Verhältnisse zwischen den Fig. 7a-c, 7d-f und 7g-i unterscheiden sich hinsichtlich der Tiefe der Reflektoren. Alle Reflektoren haben eine Apertur von a =12 µm. In den Fig. 7a-c beträgt die Tiefe 9 µm, in den Fig. 7d-7f 12 µm und in den Fig. 7g-7i 15 µm. Der Scheitel der Reflektoren beträgt 10,5 µm (Fig. 7a-c), 13,5 µm (Fig. 7d-7f) und 16,5 µm (Fig. 7g-7i). Die Gitterparameter entsprechen denen der Fig. 4. Die Gitterperiode beträgt entsprechend 550 nm. Die Eintrittswinkel für einfallende Strahlung 9 und Austrittswinkel für ausfallende Strahlung 10 sind für die Fig. 7a-7i in nachfolgender Tabelle zusammengefasst:

| Figur | Akzeptanzwinkel | Austrittswinkel |
|---|---|---|
| a | 25,0 | 28,1 |
| b | 26,0 | 29,6 |
| c | 17,5 | 18,5 |
| d | 31,5 | 17,2 |
| e | 29,5 | 14,9 |
| f | 10,5 | 4,1 |
| g | 31,5 | 6,4 |
| h | 25,4 | 2,8 |
| i | 5,5 | 1,1 |

Die Zahlenangaben sind in Grad und zeigen, dass mit zunehmenden Strukturtiefen, d. h. Tiefen des Reflektors 4, die Divergenz der Rückstrahlung 10 abnimmt, d. h. Rückstrahlung 10 also verstärkt zum Betrachter gebündelt wird, da der Austrittswinkel die Bündelung beschreibt. Größere Wellenlängen schränken zudem den Akzeptanzwinkel der einfallenden Strahlung 9 ein.

Die in Fig. 7 vorgenommene Variation der Reflexionseigenschaften der Reflektoren 4, exemplarisch anhand der Reflektortiefe erläutert, ist eine erste Möglichkeit, die Reflexionseigenschaft der Gitterreflektoren 7 zu verändern, damit das Muster aus Gitterreflektoren 7 zu modulieren und letztlich Bildinformation zu erzeugen.

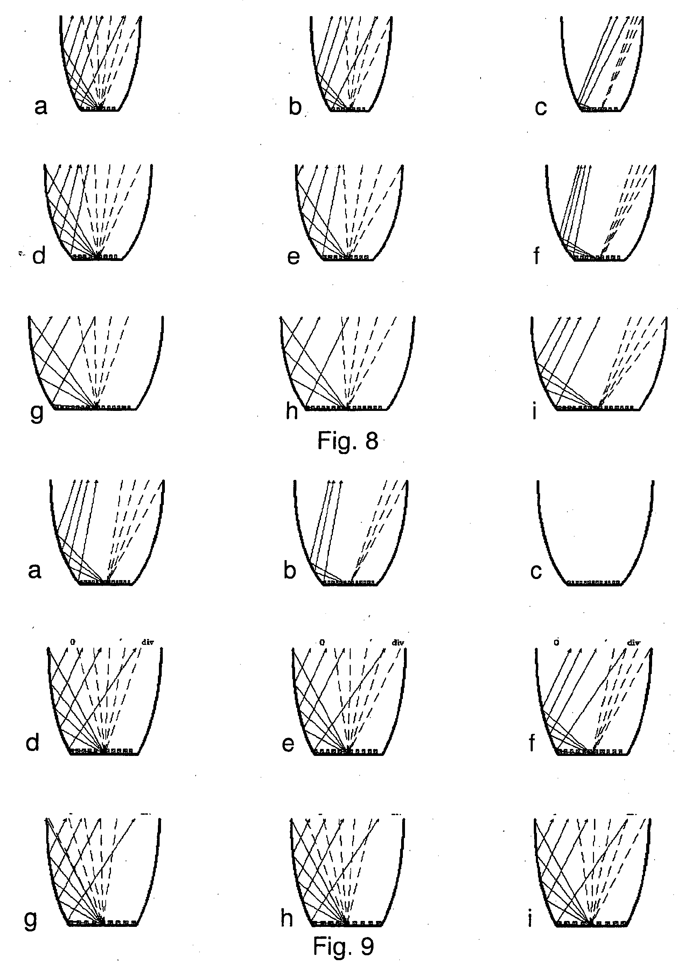

Eine Variation der Reflexionseigenschaften kann auch durch die Variation anderer Geometrieparameter der Gitterreflektoren 7 aus Gitter 6 und Reflektor 4 erreicht werden. Fig. 8 zeigt Darstellungen ähnlich denen der Fig. 7, wobei im Unterschied zur Fig. 7 nicht die Tiefe der Reflektoren, sondern die Größe der Apertur variiert ist. Sie beträgt in den Fig. 8a-c 9 µm, in den Fig. 8d-f 12 µm und in den Fig. 8g-i 15 µm. Die Wellenlängen, welche dargestellt sind, entsprechen denen der Fig. 7. Die Reflektortiefe ist in allen Anordnungen konstant bei 12 µm, der Scheitel beträgt 13,5 µm. Die Gitterperiode beträgt 550 nm. Die entsprechenden Akzeptanzwinkel für einfallende Strahlung 9 und Austrittswinkel für Rückstrahlung 10 lauten wie folgt:

| Figur | Akzeptanzwinkel | Austrittswinkel |
|---|---|---|
| A | 30,5 | 7,5 |
| B | 23,5 | 8,4 |
| C | 4,5 | 4,7 |
| D | 31,5 | 17,2 |
| E | 29,5 | 14,9 |
| F | 10,5 | 4,1 |
| G | 26,5 | 9,4 |
| H | 27,5 | 9,5 |
| I | 16,0 | 2,3 |

Es zeigt sich, dass größere Aperturen die Bündelung der Rückstrahlung 10 nicht wesentlich verschlechtern. Hingegen wächst die Fläche des Bodens 5 und damit die für das Gitter 6 zur Verfügung stehende Fläche mit zunehmender Apertur. Wie in Fig. 7 auch verringert sich der Austrittswinkel der Rückstrahlung 10 mit wachsender Wellenlänge.

Die Variation der Apertur ist eine zweite Möglichkeit, das Muster aus Gitterreflektoren 7 zu modulieren.

In den Fig. 7 und 8 wurden die Reflexionseigenschaften der Reflektoren 4 variiert. Es ist aber auch möglich, die Beugungseigenschaften des Gitters zu variieren, um den Akzeptanzwinkel der einfallenden Strahlung 9 und/ oder den Austrittswinkel der Rückstrahlung 10 zu variieren. Fig. 9 zeigt eine Darstellung ähnlich der Fig. 7, wobei nun zwischen den Fig. 9a-c, 9d-f, und 9g-i die Gitterperiode variiert ist. Die Reflektorgeometrie ist hingegen mit einer Apertur von 12 µm, einer Tiefe von 12 µm und einem Scheitel von 13,5 µm (Fig. 9a-c), 15 µm (Fig. 9d-f) und 15 µm (Fig. 9g-i) zumindest für die in den Fig. 9d-f und Fig. 9g-i gezeigten Fälle konstant. In den Fig. 9a-c beträgt die Gitterperiode 400 nm, in den Fig. 9d-f 600 nm und in den Fig. 9g-i 800 nm. Auch die dargestellten Farben sind in den Fig. 9a-i entsprechend denen der Fig. 7-i und 8a-i. Die entsprechenden Werte für den Akzeptanzwinkel und den Austrittswinkel sind folgende:

| Figur | Akzeptanzwinkel | Austrittswinkel |
|---|---|---|
| A | 19,0 | 7,7 |
| B | 9,0 | 3,7 |
| C | 0,0 | 0,0 |
| d | 31,5 | 8,8 |
| e | 32,0 | 9,7 |
| f | 16,5 | 8,9 |
| g | 32,0 | 8,9 |
| h | 31,5 | 8,7 |
| i | 32,0 | 9,6 |

Die Variante der Fig. 9a-c zeigt keine Reflexion von rotem Licht. Hingegen wird blaues oder grünes Licht durch den Reflektor 4 gebündelt zum Betrachter gelenkt, da der Austrittswinkel deutlich kleiner ist als der Akzeptanzwinkel. Die beiden anderen Fälle (Fig. 9d-f und 9g-i) zeigen keinen signifikanten Unterschied für blaues und grünes Licht. Der Akzeptanzwinkel roten Lichts nimmt für die größere Gitterperiode deutlich zu.

Die Variation der Gitterparameter ist eine dritte Möglichkeit, das Muster aus Gitterreflektoren 7 zu modulieren.

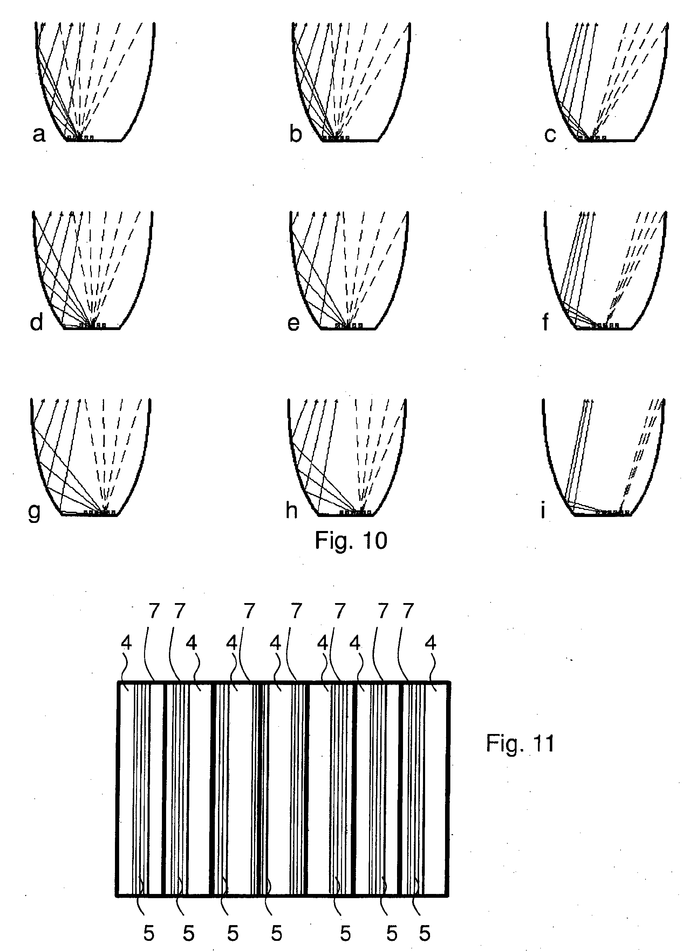

Für die Art und Weise, wie die Rückstrahlung 10 aus der einfallenden Strahlung 9 erzeugt wird, können nicht nur die Reflexionseigenschaften der Mikroreflektoren oder die Beugungseigenschaften des Gitters 6 verantwortlich sein, sondern auch die Lage des Gitters 6 zum jeweils zugeordneten Reflektor 4. Fig. 10 zeigt eine Variation in dieser Hinsicht, wobei in den Fig. 10a-c das Gitter 6 gegenüber der Symmetrieachse des Reflektors 4 am Boden 5 nach links verschoben ist, in den Fig. d-f das Gitter symmetrisch zur Symmetrieachse liegt, aber nicht den gesamten Boden 5 abdeckt, und in den Fig. 10g-i das Gitter 6 am Boden 5 nach rechts verschoben ist. Im Ausführungsbeispiel beträgt die Verschiebung -1,6 µm (Fig. 10a-c), 0 µm (Fig. 10d-f) und 1,6 µm (Fig. 10g-i). Die Reflektorgeometrie ist mit einer Apertur von 12µm, einem Scheitel von 13,5 µm und einer Tiefe von 12 µm in allen Fällen konstant. Die Gitterperiode beträgt 550 nm. Die der Darstellung der Fig. 10a-i zugrundeliegenden Farben entsprechen denen der Fig. 7, 8 und 9. Für die einzelnen Farben und Anordnungen ergibt sich damit folgendes:

| Figur | Akzeptanzwinkel | Austrittswinkel |
|---|---|---|
| a | 37,5 | 15,0 |
| b | 35,0 | 12,4 |
| c | 16,0 | 6,0 |
| d | 31,5 | 17,2 |
| e | 29,5 | 14,9 |
| f | 10,5 | 4,1 |
| g | 26,5 | 12,9 |
| h | 23,5 | 10,7 |
| i | 4,5 | 2,0 |

Den Darstellungen der Fig. 10 liegt ein Mikroreflektor mit einer Apertur von 12 µm und einer Tiefe von 12 µm zugrunde.

Fig. 10 zeigt, dass eine Linksverschiebung des Gitters den Akzeptanzwinkel für einfallende Strahlung 9 und somit die reflektierte Lichtintensität der -1. Ordnung erhöht. Die Divergenz der Rückstrahlung 10 wird hingegen deutlich weniger durch die unterschiedliche Lage des Gitters beeinflusst.

Die Variation der Lage des Gitters 6 zum Reflektor 4 ist eine vierte Möglichkeit zur Modulation des Musters aus Gitterreflektoren 7.

In den obigen Beispielen sind Reflektoren mit elliptischen Geometrien untersucht und dargestellt. Natürlich kann durch eine andere Geometrie die Lichtbündlung einer bestimmten Farbe zum Betrachter optimiert werden, so dass ein Betrachter diese Farbe dominant wahrnimmt.

Weiter sind auch andere Parameter als die dargestellten geeignet und in Ausführungsformen verwendbar, um die Beugungseigenschaften der Gitter oder die Reflexionseigenschaften der Mikroreflektoren zu beeinflussen. Neben einer Variation der Krümmung der Reflektoren 4 kann auch die Geometrie der Reflektoren 4 asymmetrisch ausgelegt werden. Ferner kann neben der Periode auch das Profil des Gitters 6 variiert werden, um ein örtlich variierendes gesamtes Reflexionsverhalten der jeweiligen Gitterreflektoren aus Reflektor und Gitter zu erzielen. Zudem ist es möglich, den Boden 5 schräg auszugestalten, also das Gitter ortsabhängig zum Reflektor 4 hin zu neigen.

Selbstverständlich können die genannten Möglichkeiten auch beliebig kombiniert werden.

Es kommen somit eine Vielzahl an Parametern in Frage, um beim erfindungsgemäßen Sicherheitselement 1 innerhalb des Musters die Rückstrahlung 10 ortsabhängig unterschiedlich zu gestalten und somit innerhalb des Musters die durch die Gitterreflektoren 7 rückgestreute Strahlung zu modulieren.

Als Gitter können nicht nur eindimensional periodische Gitter verwendet werden, und sie müssen auch nicht mit Reflektoren kombiniert werden, die in dieselbe Raumrichtung gekrümmt sind. Es sind auch Gitter 6 möglich, die um eine Symmetrieachse des Reflektors 4 verdreht sind, und die Verdrehung wird innerhalb des Musters zur Modulation variiert. Bei zweidimensionalen periodischen Gittern 6 eignen sich besonders Kreuzgitter, wobei bevorzugt die Periodizität senkrecht zu den Krümmungen eines Reflektors mit einer rechteckigen Apertur verläuft. Zirkulargitter sind hingegen besonders für Reflektoren mit runden Aperturen geeignet. Natürlich sind auch Mischformen oder elliptische Gitter in Reflektoren mit elliptischen Aperturen möglich.

Zur Erzeugung der Motive sind jeweils aus Gitter und Reflektor gebildete Gitterreflektoren 7 nebeneinander angeordnet, wobei ihre Ausgestaltung lateral variiert, um ein Bild beispielsweise als farbiges Symbol auszubilden. Die Variation der Beugungseigenschaften der Gitter 6, oder der Lage der Gitter 6 zum jeweiligen zugeordneten Reflektor 4 oder der Reflexionseigenschaft der Reflektoren 4 oder einer Kombination daraus bewirkt einen Farb- bzw. Intensitätskontrast im Motiv. Da zudem die Gitter 6 stark winkelabhängige Eigenschaften besitzen, können die Motive, wie bereits erwähnt, zur Erzeugung von Parallaxenbildern verwendet werden. Hierdurch lassen sich sowohl parallaktische Bewegungen als auch räumliche Effekte implementieren.

Fig. 11 zeigt ein einfaches Beispiel einer Mehrzahl von Gitterreflektoren 7 in Aufsicht, deren Gitter 6 als Lineargitter ausgebildet sind und mit rinnenförmigen Reflektoren 4 kombiniert sind. Die rinnenförmigen Reflektoren 4 liegen periodisch nebeneinander. Die Gitter 6 sind lateral zum Reflektor verschoben, wobei die Verschiebung kontinuierlich ist und im Ausführungsbeispiel durch eine etwa um 15 % kleinere Frequenz der einzelnen Gitter gegenüber der Frequenz der Reflektoren 4 zustande kommt. Ein Betrachter nimmt die einzelnen Gitterreflektoren aus Reflektor und Gitter unterschiedlich hell wahr, so dass sich eine Intensitätsmodulation für die einzelnen Streifen ergibt.

Außerhalb des optisch wirksamen Gitters kann der Boden eben sein oder auch mit einer (lichtabsorbierenden) Mottenaugenstruktur oder einer Subwellenlängenstruktur versehen sein. Letztere Varianten verbessern den Kontrast, da hierdurch die spiegelnde Reflexion unterdrückt wird.

Ferner ist bei einer typischen Betrachtungssituation die Wahrnehmung für das linke und das rechte Auge aufgrund der unterschiedlichen Einblickwinkel unterschiedlich, was, wie noch erläutert wird, für einen stereoskopischen Effekt eingesetzt werden kann.

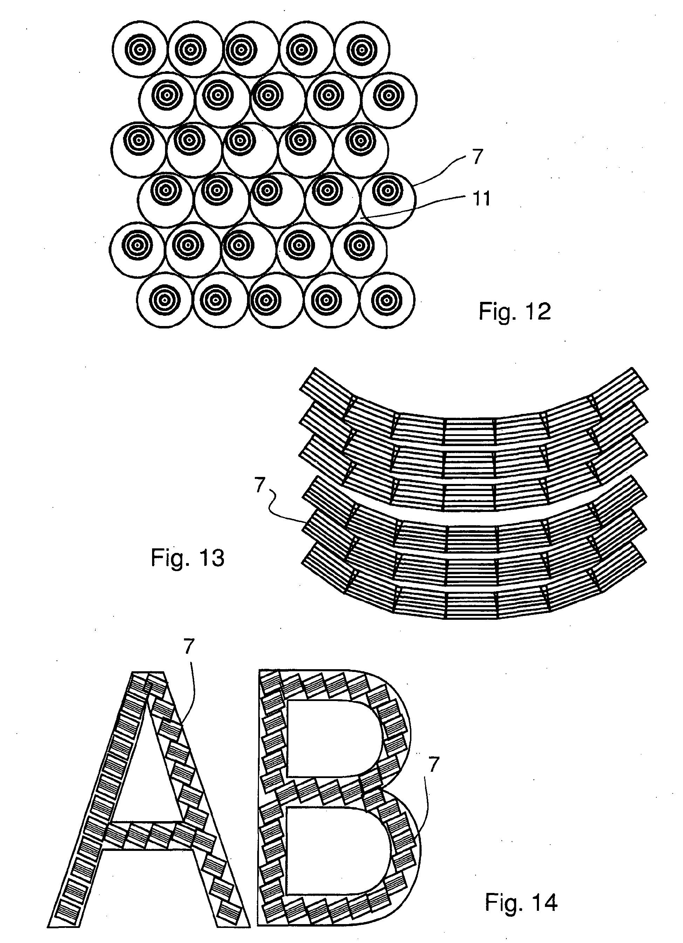

Eine laterale Variation kann natürlich auch durch zweidimensionale Gitterreflektoren 7 erzielt werden. Fig. 12 zeigt eine Darstellung, die dem unteren Teil der Fig. 1 ähnelt. Hier sind rotationssymmetrische Reflektoren 4 mit Zirkulargittern 6 kombiniert, wobei die einzelnen Gitter 6 innerhalb des zugeordneten Reflektors 4 unterschiedlich verschoben sind. Für einen Betrachter sind die einzelnen Gitterreflektoren 7 unterschiedlich hell, da sie die einfallende Strahlung bei einem gegebenen Betrachtungswinkel unterschiedlich stark zum Betrachter bündeln. Eine besonders hohe Flächenabdeckung erreicht man mit den Gitterreflektoren 7, wenn sie in einem Hexagonalmuster angeordnet sind. Jeder einzelne Gitterreflektor 7 realisiert ein Pixel, d. h. einen Bildpunkt, so dass die Variation der genannten Eigenschaft, in diesem Fall der Relativlage des Gitters 6 zum jeweils zugeordneten Reflektor 4, das Bild moduliert.

Für eine stereoskopische Wahrnehmung benötigt man zwei Bilder; ein Bild für das linke Auge und ein anderes für das rechte. Solche stereoskopischen Bilder können ebenfalls mit dem Sicherheitselement 1 gemäß Fig. 1 erzeugt werden. Das Licht wird dann durch die Variation der Eigenschaften so in unterschiedliche Richtungen gelenkt, dass für das linke Auge und das rechte Auge eine unterschiedliche Modulation erreicht wird. Fig. 13 zeigt eine exemplarische Anordnung von Lineargittern 6 in rinnenförmigen Reflektoren 4, wobei die Gitter 6 gegeneinander verkippt sind und unterschiedliche Perioden aufweisen. Die unterschiedlichen Gitterperioden bewirken einen Farbeffekt der Struktur. Die auf der linken Seite befindlichen Gitterreflektoren 7 lenken die einfallende Strahlung bevorzugt in Richtung des linken Auges eines Betrachters, während die rechts liegenden Gitterreflektoren das rechte Auge mit Rückstrahlung 10 beaufschlagen. Durch die Wahl unterschiedlicher Gitterperioden oder Reflektorgeometrien wird der Farbeindruck variiert. Die Anordnung der Gitterreflektoren 7 gemäß Fig. 13 erlaubt es somit, räumliche Effekte sowie Bewegungseffekte darzustellen.

Ein einfaches Ausführungsbeispiel für dieses Prinzip zeigt Fig. 14. Die Fläche der beiden Buchstaben "AB" ist mit einer Vielzahl von Gitterreflektoren 7 gefüllt. Hierbei sind die Gitterreflektoren im Buchstaben "A" so orientiert, dass sie das Licht bevorzugt zum linken Auge lenken. Das Licht vom Buchstaben "B" wird dagegen in erster Linie vom rechten Auge wahrgenommen. Bei einer entsprechenden kleinen Gestaltung der Gitterreflektoren 7, also einer entsprechend kleinen Pixelierung, können die beiden Symbole auch ineinander verschachtelt vorliegen.

Fig. 15 zeigt ein Ausführungsbeispiel ähnlich dem der Fig. 1. Entsprechend sind auch die Bezugszeichen für funktionell oder strukturell identische Elemente aus Fig.1 übernommen. Im Sicherheitselement 1 der Fig. 15 wird ebenfalls ein Muster aus Gitterreflektoren 7 verwendet. Zwischen benachbarten Gitterreflektoren 7 bleiben im Substrat Stege stehen, die in Stegflächen 11 resultieren, welche zwischen den einzelnen Gitterreflektoren 7 liegen. Die Stegflächen sind in der Bauweise der Fig. 15 lateral dahingehend strukturiert, dass einige Stegflächen 11 mit einer Metallisierung 12 versehen sind, andere jedoch nicht. Fig. 16 zeigt diesen Zustand in einer Draufsicht ähnlich der Ansicht der Fig. 12.

Durch die nur bereichsweise Metallisierung der Stegflächen 11 sind Bereiche I und II geschaffen, in denen die Stegflächen mit einer Metallschicht 12 (Bereiche I) bzw. ohne Metallschicht (Bereiche II) vorgesehen sind. Die Metallisierung hat die Folge, dass einfallende Strahlung 9, die auf eine metallisierte Stegfläche 11 einfällt, als Reflex 13 zurückgeworfen wird. In den Bereichen II, in denen die Stegflächen 11 nicht metallisiert sind, wird die einfallende Strahlung hingegen nicht reflektiert. Das Sicherheitselement 1 ist so in Bereiche I und II unterteilt, die sich in ihrem Reflexionsverhalten und auch in ihrem Transmissionsverhalten unterscheiden. Durch laterale Strukturierung der Metallisierung kann damit im Sicherheitselement 1 zusätzliche Information kodiert werden. Statt einer Metallisierung kann auch eine andersartige Reflexionsschicht verwendet werden.

Anstelle einer Metallisierung oder Reflexionsschicht kann eine Absorptionsschicht ausgebildet werden; die laterale Strukturierung der Stegflächen 11 wirkt sich dann nicht auf das Reflexionsverhalten, jedoch auf das Transmissionsverhalten aus.

Eine weitere Beeinflussungsmöglichkeit ist in Fig. 15 ebenfalls angedeutet. Es handelt sich hierbei um die Dicke der Stege unter den Stegflächen 11, d. h. um die Dicke des Substrates 2 im Bereich der Stege 11. In Fig. 15 sind exemplarisch in den Bereichen I die Stege im Bereich der Stegflächen weniger dick als in den Bereichen II. Bei geeigneter Wahl des Substrates kann dies ebenfalls das Transmissionsverhalten beeinflussen. Die unterschiedliche Höhe der Plateaus, auf denen die Stegflächen 11 liegen, ergibt sich in der Bauweise der Fig. 15 automatisch dann, wenn man Gitterreflektoren 7 mit unterschiedlicher Tiefe ausbildet, und die Böden 5 auf einem Niveau liegen. Die unterschiedliche Tiefe der Gitterreflektoren 7, beispielsweise in den Bereichen I und II, führt dann automatisch zu einer unterschiedlichen Dicke des Substrates im Bereich der Stegflächen 11. Wie nachfolgend noch näher erläutert, kann eine unterschiedliche Höhe der Plateaus, auf denen die Stegflächen 11 liegen, auch bei der Erzeugung der lateral variierenden Beschichtung vorteilhaft eingesetzt werden.

Die Stegflächen 11 entstehen immer dann, wenn Gitterreflektoren nicht nahtlos aneinander stoßen. Die Gesamtfläche der Stegflächen 11 hängt damit vom Muster ab, in dem die Gitterreflektoren 7 angeordnet werden. Ordnet man sie, wie beispielsweise in Fig. 12, mit einer hohen Flächenabdeckung in Form eines Hexagonalmusters an, ist die Gesamtfläche der Stegflächen 11 sehr gering. Bei rechteckigen Aperturen der Gitterreflektoren kann die Gesamtfläche der Stegflächen 11 beliebig klein gemacht werden. Lässt man, wie in Fig. 16, bewusst einen Abstand zwischen den Gitterreflektoren, steigt die Gesamtfläche der Stegflächen 11. Durch diese Maßnahme lässt sich der Transmissionsoder Reflexionseffekt, der von den Stegflächen 11 bewirkt wird, gezielt einstellen. Mit anderen Worten, die Deutlichkeit, mit der ein Symbol oder Bild durch die laterale Strukturierung der Stegflächen 11 erkennbar ist, kann eingestellt werden, indem man die Gesamtfläche der Stegflächen durch den Abstand der Gitterreflektoren 7 entsprechend wählt.

Das im Sicherheitselement 1 der Fig. 1 verwendete Prinzip stellt einen großen Baukasten bereit, mit dem Muster oder Symbole durch Gitterreflektoren 7 gestaltet werden können. Die Variation der Gitterreflektoren 7 im Muster kann durch viele Parameter realisiert werden.

Die Struktur des Sicherheitselementes 1 kann sehr einfach in einem einzigen Prägeprozess hergestellt werden. Dazu benötigt man lediglich ein entsprechendes Prägewerkzeug, das eine entsprechende negative Form für jeden Gitterreflektor 7 hat, also sowohl die Reflektoren 4 als auch die Gitter 6 erzeugt. Um eine hohe Ausbeute der Gitterreflektoren 7 zu erreichen, müssen die Gitter 6 dabei präzise im Prägewerkzeug ausgebildet sein. Die Herstellung des Prägewerkzeugs kann mithilfe von Elektronenstrahlschreibanlagen oder interferometrischen Verfahren erreicht werden.

Die Reflektoren 4 haben typischerweise eine Tiefe von 2 bis 30 µm, ein besonders bevorzugter Bereich liegt zwischen 5 und 20 µm. Geringere Tiefen sind sowohl hinsichtlich Herstellung des Prägewerkzeugs als auch der späteren Vervielfältigung vorteilhaft. Jedoch entfaltet das Gitter 6 seine Wirkung optisch erst dann, wenn mindestens 4 bis 10 Gitterperioden am Boden 5 untergebracht werden können. Dies gibt eine untere Grenze für die Größe der Reflektoren 4. Eine obere Grenze ergibt sich dann, wenn man die Gitterreflektoren 7 als Pixel einsetzen möchte, die naturgemäß möglichst klein sein sollen und insbesondere nicht mehr mit unbewaffnetem Auge aufgelöst werden sollten. Andererseits ist eine möglichst flache Prägung bei der Vervielfältigung vorteilhaft.

Zum Erzeugen des Prägewerkzeugs werden bevorzugt zuerst die Reflektoren 4 erzeugt, beispielsweise photolithographisch durch Direct-Laserwriting. Unabhängig davon wird die Struktur der Gitter 6 erzeugt. Diese beiden Vorgänge nimmt man bevorzugt passgenau in ein und demselben Photolack vor, der als Vorlage Basis für das Prägewerkzeug ist. Alternativ sind auch zwei unterschiedliche Belackungsvorgänge möglich.

Auch ist es in einer Variante möglich, zuerst ein homogenes Gitter zu erzeugen, dieses zu belacken und dann lateral unterschiedlich ausgebildete Mikroreflektoren zu erzeugen, beispielsweise per Laserwriting. Dazu wird zunächst ein Gitter beispielsweise mithilfe eines Elektronenstrahl-Belichtungsverfahrens hergestellt und abgeformt. Anschließend wird dieses Gitter-Substrat mit einem Photolack in ausreichender Dicke, z. B. 10 µm, beschichtet. Dann werden Reflektoren 4 im Direktbelichtungsverfahren mit einem Laserwriter einbelichtet, so dass das Gitter 6 in der Mitte der einzelnen Reflektoren nach dem Entwickeln frei liegt.

Die verwendeten Laserwriter können mit 2-Photonenabsorptionsprozessen arbeiten. Es ist dann möglich, Reflektoren 4 wie Gitter 6 in einem einzigen Prozess zu erzeugen.

Die für das Prägewerkzeug hergestellte Vorlage wird nun galvanisch oder in einem Nanoimprint-Verfahren umkopiert.

Da im Prägeverfahren einer Folie üblicherweise eine Vielzahl von Sicherheitselementen in einem Prägeschritt erzeugt werden sollen, ist es zu bevorzugen, im Prägewerkzeug mehrere nebeneinanderliegende Stempelelemente vorzusehen, die jeweils auf die vorbeschriebene Art aus einer Vorlage erzeugt wurden.

Die geprägte Folie wird bevorzugt mit einer opaken Metallschicht überzogen. Hierzu kommen Sputtern, Elektronenstrahlbedampfung oder therrnisches Verdampfen in Frage. Als Metalle eignen sich besonders Aluminium, Silber, Gold, Nickel oder Chrom oder Legierungen aus diesen Materialien. Die Dicken der Metallschicht liegen zwischen 20 und 100 nm. Die Metalloberfläche wird dann abschließend bevorzugt mit einer Schutzschicht überzogen oder mit einer Deckfolie kaschiert.

Hier zeigt sich ein weiterer Vorteil des Sicherheitselementes gegenüber bekannten Moiré-Anordnungen, da die dort meist verwendeten Mikrolinsen nicht mit einer Deckschicht überzogen werden können. Ihre optisch abbildende Eigenschaft ginge dabei verloren.

Zum Erzeugen einer lateral strukturierten Beschichtung der Stegflächen 11 wird bevorzugt zuerst eine entsprechende Beschichtung auf alle Stegflächen 11 aufgebracht und dann wieder von einigen Stegflächen entfernt. Im Falle einer Metallisierung wird das Entfernen durch ein geeignetes Demetallisierungsverfahren ausgeführt. Dabei kann insbesondere ein Ätzprozess oder ein Transferverfahren gemäß WO 2011/138039 A1 zur Anwendung kommen. Auch ist eine Entfernung der Beschichtung, beispielsweise eine Demetallisierung, mit Hilfe von Ultrakurzpulslasern und dem Einsatz eines schreibenden Laserstrahls möglich.

Bei der Entfernung der Beschichtung kann gezielt verhindert werden, dass diese auch im Bereich der Gitterreflektoren 7 bzw. in den Bereichen I entfernt wird. So ist es beispielsweise möglich, die metallisierte Prägestruktur 3 komplett mit einem Photoresist aufzufüllen, d. h. einzuebnen. Dann kann man den Photoresist beispielsweise bis auf die Niveaus der höher liegenden Stegflächen 11 (Bereiche II) ätzen und die derart freigelegte Beschichtung entfernen, beispielsweise eine Metallschicht ätzen. Eine anschließende Entfernung des Photoresists legt dann die Gitterreflektoren 7 sowie die auf einem tieferen Niveau liegenden Stegflächen 11 mit der Metallisierung 12 (Bereiche I) wieder frei, die auf diese Art und Weise vom Eingriff an den Stegflächen 11 in den Bereichen II nicht betroffen sind.

### Bezugszeichenliste

- 1: Sicherheitselement
- 2: Folie
- 3: Prägestruktur
- 4: Reflektor
- 5: Boden
- 6: Gitter
- 7: Gitterreflektor
- 8: Apertur
- 9: einfallende Strahlung
- 10: Rückstrahlung
- 11: Stegfläche
- 12: Metallisierung
- 13: Reflex
- I, II: Bereich

## Patentansprüche

1. Sicherheitselement für einen zu schützenden Gegenstand, wie z. B. ein Sicherheitspapier, Wertdokument oder dergleichen, das ein Substrat mit mehreren, in einem Muster angeordneten Mikroreflektoren und mehreren Mikrostrukturen aufweist, die zusammen mit den Mikroreflektoren ein von einem Betrachter wahrnehmbares Bild erzeugen, **dadurch gekennzeichnet, dass**
- jede Mikrostruktur als reflektives Gitter ausgebildet und einem der Mikroreflektoren zugeordnet ist, wodurch Gitterreflektoren bestehend aus jeweils einem Mikroreflektor und mindestens einem Gitter gebildet sind,
- jedes Gitter so ausgebildet ist, dass es sichtbare Strahlung, die aus einem Halbraum einfällt, in eine erste Beugungsordnung und zum zugeordneten Mikroreflektor hin beugt,
- in jedem Gittereflektor das Gitter und der Mikroreflektor so aufeinander abgestimmt sind, dass der Mikroreflektor vom Gitter in die erste Beugungsordnung gebeugte Strahlung als Rückstrahlung in den Halbraum zurück reflektiert, und
- innerhalb des Musters mindestens eine der folgenden Eigenschaften der Gitterreflektoren variiert, um das Bild zu erzeugen: Beugungseigenschaft der Gitter, Lage der Gitter zum jeweils zugeordneten Mikroreflektor, Reflexionseigenschaft der Mikroreflektoren.

2. Sicherheitselement nach Anspruch 1, **dadurch gekennzeichnet, dass** die Mikroreflektoren jeweils als konkave Hohlspiegel oder konkave Rinnen mit einem ebenen Boden ausgebildet sind, wobei das Gitter am ebenen Boden angeordnet ist, insbesondere, dass der ebene Boden der Mikroreflektoren schräg ausgestaltet ist, so dass sich das Gitter zum Mikroreflektor hin neigt.

3. Sicherheitselement nach Anspruch 2, **dadurch gekennzeichnet, dass** die Mikroreflektoren jeweils als konkave Hohlspiegel ausgebildet sind, die rotationssymmetrisch sind.

4. Sicherheitselement nach einem der obigen Ansprüche, **dadurch gekennzeichnet, dass** die Mikroreflektoren eine Tiefe von 2 µm bis 30 µm haben, bevorzugt von 5 µm bis 20 µm.

5. Sicherheitselement nach einem der obigen Ansprüche, **dadurch gekennzeichnet, dass** jedes Gitter eine Gitterperiode zwischen 0,3 µm und 1 µm hat.

6. Sicherheitselement nach einem der obigen Ansprüche, **dadurch gekennzeichnet, dass** die Gitter als geblazte Gitter ausgebildet sind.

7. Sicherheitselement nach einem der obigen Ansprüche, **dadurch gekennzeichnet, dass** Mikroreflektoren und Gitter an ihrer dem Halbraum zugewandten Seite metallisch beschichtet sind, bevorzugt mit A1, Ag, Au, Cu, Cr oder einer diese Metalle enthaltenden Legierung.

8. Sicherheitselement nach einem der obigen Ansprüche, **dadurch gekennzeichnet, dass** die Eigenschaft der Gitterreflektoren innerhalb des Musters so variiert, dass mittels Moire-Effekt ein Bild erzeugt wird.

9. Sicherheitselement nach einem der obigen Ansprüche, **dadurch gekennzeichnet, dass** zumindest bereichsweise zwischen benachbarten Gitterreflektoren eine Stegfläche gebildet ist, wobei im Muster mehrere Stegflächen vorhanden sind, die sich hinsichtlich einer Oberflächenbeschichtung, insbesondere einer metallischen Oberflächenbeschichtung unterscheiden.

10. Sicherheitspapier oder Wertdokument, **gekennzeichnet durch** ein Sicherheitselement nach einem der Ansprüche 1 bis 9.

11. Verfahren zum Herstellen eines Sicherheitselementes für einen zu schützenden Gegenstand, wie z. B. ein Sicherheitspapier, Wertdokument oder dergleichen, wobei auf einem Substrat mehrere, in einem Muster angeordnete Mikroreflektoren und mehrere Mikrostrukturen ausgebildet werden, die zusammen mit den Mikroreflektoren ein von einem Betrachter wahrnehmbares Bild erzeugen, **dadurch gekennzeichnet, dass**
- jede Mikrostruktur als reflektives Gitter ausgebildet und einem der Mikroreflektoren zugeordnet wird, wodurch Gitterreflektoren bestehend aus jeweils einem Mikroreflektor und mindestens einem Gitter gebildet werden,
- wobei jedes Gitter so ausgebildet wird, dass es sichtbare Strahlung, die aus einem Halbraum einfällt, in eine erste Beugungsordnung und zum zugeordneten Mikroreflektor hin beugt,
- in jedem Gitterreflektor das Gitter und der Mikroreflektor so aufeinander abgestimmt werden, dass der Mikroreflektor vom Gitter in die erste Beugungsordnung gebeugte Strahlung als Rückstrahlung in den Halbraum zurück reflektiert, und
- innerhalb des Musters mindestens eine der folgenden Eigenschaften der Gitterreflektoren variiert wird, um das Bild zu erzeugen: Beugungseigenschaft der Gitter, Lage der Gitter zum jeweils zugeordneten Mikroreflektor, Reflexionseigenschaft der Mikroreflektoren.

12. Verfahren nach Anspruch 11, **dadurch gekennzeichnet, dass** die Mikroreflektoren jeweils als konkave Hohlspiegel oder konkave Rinnen mit einem ebenen Boden ausgebildet werden, wobei das Gitter am ebenen Boden angeordnet wird, insbesondere, dass der ebene Boden der Mikroreflektoren schräg gestaltet wird, sodass sich das Gitter zum Mikroreflektor hin neigt.

13. Verfahren nach Anspruch 11 oder 12, **dadurch gekennzeichnet, dass** die Mikroreflektoren mit einer Tiefe von 2 µm bis 30 µm ausgebildet werden, bevorzugt mit einer Tiefe von 5 µm bis 20 µm.

14. Verfahren nach einem der Ansprüche 1 bis 13, **dadurch gekennzeichnet, dass** jedes Gitter mit einer Gitterperiode zwischen 0,3 µm um 1 µm ausgebildet wird.

15. Verfahren nach einem der Ansprüche 11 bis 14, **dadurch gekennzeichnet, dass** die Mikroreflektoren und Gitter an ihrer dem Halbraum zugewandten Seite metallisch beschichtet werden, bevorzugt mit Al, Ag, Au, Cu, Cr oder einer diese Metalle enthaltenden Legierung.

16. Verfahren nach einem der Ansprüche 11 bis 15, **dadurch gekennzeichnet, dass** die Gitterreflektoren so angeordnet werden, dass zumindest bereichsweise zwischen benachbarten Gitterreflektoren eine Stegfläche gebildet wird, wobei im Muster mehrere Stegflächen vorgesehen werden, die sich hinsichtlich einer Oberflächenbeschichtung, insbesondere einer metallischen Oberflächenbeschichtung unterscheiden, insbesondere, dass die Stegflächen zuerst metallisch beschichtet und dann zumindest abschnittsweise demetallisiert werden.

## Claims

1. A security element for an object to be protected, such as e.g. a security paper, value document or the like, which has a substrate with a plurality of microreflectors disposed in a pattern and a plurality of microstructures which together with the microreflectors produce an image perceptible to a viewer, **characterized in that**
- each microstructure is configured as a reflective grating and associated with one of the microreflectors, thereby forming grating reflectors each consisting of one microreflector and at least one grating,
- each grating is so configured that it diffracts visible radiation incident from a half-space into a first diffraction order and toward the associated microreflector,
- in each grating reflector the grating and the microreflector are matched to each other such that the microreflector reflects radiation diffracted by the grating into the first diffraction order back into the half-space as return radiation, and
- within the pattern at least one of the following properties of the grating reflectors varies to produce the image: diffracting property of the gratings, position of the gratings relative to the respectively associated microreflector, reflecting property of the microreflectors.

2. The security element according to claim 1, **characterized in that** the microreflectors are respectively configured as concave concave mirrors or concave troughs with a plane bottom, wherein the grating is disposed on the plane bottom, in particular that the plane bottom of the microreflectors is configured obliquely, so that the grating is inclined toward the microreflector.

3. The security element according to claim 2, **characterized in that** the microreflectors are respectively configured as concave concave mirrors which are rotationally symmetric.

4. The security element according to any of the above claims, **characterized in that** the microreflectors have a depth of 2 µm to 30 µm, preferably of 5 µm to 20 µm.

5. The security element according to any of the above claims, **characterized in that** each grating has a grating period between 0.3 µm and 1 µm.

6. The security element according to any of the above claims, **characterized in that** the gratings are configured as blazed gratings.

7. The security element according to any of the above claims, **characterized in that** microreflectors and gratings are coated metallically on their side facing the half-space, preferably with Al, Ag, Au, Cu, Cr or an alloy containing said metals.

8. The security element according to any of the above claims, **characterized in that** the property of the grating reflectors so varies within the pattern that an image is produced by means of a moiré effect.

9. The security element according to any of the above claims, **characterized in that** a bar area is formed at least regionally between neighboring grating reflectors, wherein there are present in the pattern a plurality of bar areas which differ with regard to a surface coating, in particular a metallic surface coating.

10. A security paper or value document, **characterized by** a security element according to any of the claims 1 to 9.

11. A method for manufacturing a security element for an object to be protected, such as e.g. a security paper, value document or the like, wherein there are formed on a substrate a plurality of microreflectors disposed in a pattern and a plurality of microstructures which together with the microreflectors produce an image perceptible to a viewer, **characterized in that**
- each microstructure is configured as a reflective grating and associated with one of the microreflectors, thereby forming grating reflectors each consisting of one microreflector and at least one grating,
- wherein each grating is so configured that it diffracts visible radiation incident from a half-space into a first diffraction order and toward the associated microreflector,
- in each grating reflector the grating and the microreflector are matched to each other such that the microreflector reflects radiation diffracted by the grating into the first diffraction order back into the half-space as return radiation, and
- within the pattern at least one of the following properties of the grating reflectors is varied to produce the image: diffracting property of the gratings, position of the gratings relative to the respectively associated microreflector, reflecting property of the microreflectors.

12. The method according to claim 11, **characterized in that** the microreflectors are respectively configured as concave concave mirrors or concave troughs with a plane bottom, wherein the grating is disposed on the plane bottom, in particular that the plane bottom of the microreflectors is configured obliquely, so that the grating is inclined toward the microreflector.

13. The method according to claim 11 or 12, **characterized in that** the microreflectors are configured with a depth of 2 µm to 30 µm, preferably with a depth of 5 µm to 20 µm.

14. The method according to any of the claims 1 to 13, **characterized in that** each grating is configured with a grating period between 0.3 µm and 1 µm.

15. The method according to any of the claims 11 to 14, **characterized in that** the microreflectors and gratings are coated metallically on their side facing the half-space, preferably with Al, Ag, Au, Cu, Cr or an alloy containing said metals.

16. The method according to any of the claims 11 to 15, **characterized in that** the grating reflectors are so disposed that a bar area is formed at least regionally between neighboring grating reflectors, wherein there are provided in the pattern a plurality of bar areas which differ with regard to a surface coating, in particular a metallic surface coating, in particular that the bar areas are first coated metallically and then demetallized at least in some portions.

## Revendications

1. Élément de sécurité destiné à un objet à protéger tel que p.ex. un papier de sécurité, document de valeur ou objet similaire, qui comporte un substrat doté de plusieurs microréflecteurs agencés en un motif et de plusieurs microstructures qui, conjointement avec les microréflecteurs, génèrent une image perceptible par un observateur, **caractérisé en ce que**
- chaque microstructure est réalisée sous forme de grille de réflexion et est associée à un des microréflecteurs de façon à former des réflecteurs à grille consistant respectivement en un microréflecteur et en au moins une grille,
- chaque grille est réalisée de telle façon qu'elle diffracte du rayonnement visible incident depuis un espace semi-infini dans un premier ordre de diffraction et en direction du microréflecteur associé,
- dans chaque réflecteur à grille, la grille et le microréflecteur sont accordés de telle manière entre eux que le microréflecteur réfléchit à nouveau du rayonnement diffracté par la grille dans le premier ordre de diffraction sous la forme d'un rayonnement de retour dans l'espace semi-infini, et
- au sein du motif, au moins une des propriétés suivantes des réflecteurs à grille varie afin de générer l'image: propriété de diffraction des grilles, position des grilles par rapport au microréflecteur respectivement associé, propriété de réflexion des microréflecteurs.

2. Élément de sécurité selon la revendication 1, **caractérisé en ce que** les microréflecteurs sont respectivement réalisés sous forme de miroirs creux concaves ou rigoles concaves à fond plan, la grille étant agencée sur le fond plan, en particulier **en ce que** le fond plan des microréflecteurs est réalisé sous forme oblique, de telle façon que la grille est inclinée vers le microréflecteur.

3. Élément de sécurité selon la revendication 2, **caractérisé en ce que** les microréflecteurs sont respectivement réalisés sous forme de miroirs creux concaves présentant une symétrie de révolution.

4. Élément de sécurité selon une des revendications précédentes, **caractérisé en ce que** les microréflecteurs ont une profondeur de 2 µm à 30 µm, de préférence de 5 µm à 20 µm.

5. Élément de sécurité selon une des revendications précédentes, **caractérisé en ce que** chaque grille a une période réticulaire située entre 0,3 µm et 1 µm.

6. Élément de sécurité selon une des revendications précédentes, **caractérisé en ce que** les grilles sont réalisées sous forme de grilles flambées.

7. Élément de sécurité selon une des revendications précédentes, **caractérisé en ce que** les microréflecteurs et les grilles sont, en leur côté tourné vers l'espace semi-infini, pourvus d'un revêtement métallique, de préférence de Al, Ag, Au, Cu, Cr ou d'un alliage contenant ces métaux.

8. Élément de sécurité selon une des revendications précédentes, **caractérisé en ce que** la propriété des réflecteurs à grille est si variée au sein du motif que, au moyen de l'effet de Moiré, une image est générée.

9. Élément de sécurité selon une des revendications précédentes, **caractérisé en ce que**, au moins en certaines zones entre des réflecteurs à grille adjacents, une surface de traverse est constituée, il y ayant dans le motif plusieurs surfaces de traverse qui se différencient quant à un revêtement de surface, en particulier quant à un revêtement métallique de surface.

10. Papier de sécurité ou document de valeur, **caractérisé par** un élément de sécurité selon une des revendications de 1 à 9.

11. Procédé de fabrication d'un élément de sécurité destiné à un objet à protéger tel que p.ex. un papier de sécurité, document de valeur ou objet similaire, cependant que, sur un substrat, sont réalisés plusieurs microréflecteurs agencés en un motif et plusieurs microstructures qui, en association avec les microréflecteurs, génèrent une image perceptible par un observateur, **caractérisé en ce que**
- chaque microstructure est réalisée sous forme de grille de réflexion et est associée à un des microréflecteurs, de façon à former des réflecteurs à grille consistant respectivement en un microréflecteur et en au moins une grille,
- cependant que chaque grille est réalisée de telle façon qu'elle diffracte du rayonnement visible incident depuis un espace semi-infini dans un premier ordre de diffraction et en direction du microréflecteur associé,
- dans chaque réflecteur à grille, la grille et le microréflecteur sont accordés de telle manière entre eux que le microréflecteur réfléchit à nouveau du rayonnement diffracté par la grille dans le premier ordre de diffraction sous la forme d'un rayonnement de retour dans l'espace semi-infini, et
- au sein du motif, au moins une des propriétés suivantes des réflecteurs à grille est amenée à varier afin de générer l'image: propriété de diffraction des grilles, position des grilles par rapport au microréflecteur respectivement associé, propriété de réflexion des microréflecteurs.

12. Procédé selon la revendication 11, **caractérisé en ce que** les microréflecteurs sont respectivement réalisés sous forme de miroirs creux concaves ou rigoles concaves à fond plan, la grille étant agencée sur le fond plan, en particulier **en ce que** le fond plan des microréflecteurs est réalisé sous forme oblique, de telle façon que la grille est inclinée vers le microréflecteur.

13. Procédé selon la revendication 11 ou 12, **caractérisé en ce que** les microréflecteurs sont réalisés en une profondeur de 2 µm à 30 µm, de préférence en une profondeur de 5 µm à 20 µm.

14. Procédé selon une des revendications de 1 à 13, **caractérisé en ce que** chaque grille est réalisée de telle façon qu'elle a une période de grille située entre 0,3 µm à 1 µm.

15. Procédé selon une des revendications de 11 à 14, **caractérisé en ce que** les microréflecteurs et les grilles sont, en leur côté tourné vers l'espace semi-infini, pourvus d'un revêtement métallique, de préférence de Al, Ag, Au, Cu, Cr ou d'un alliage contenant ces métaux.

16. Procédé selon une des revendications de 1 à 15, **caractérisé en ce que** les réflecteurs à grille sont agencés de telle façon que, au moins en certaines zones entre des réflecteurs à grille adjacents, une surface de traverse est constituée, il étant prévu dans le motif plusieurs surfaces de traverse qui se différencient quant à un revêtement de surface, en particulier quant à un revêtement métallique de surface, en particulier **en ce que** les surfaces de traverse sont tout d'abord pourvues d'un revêtement métallique, puis démétallisées au moins par sections.
